# EUROPEAN PATENT APPLICATION

(11) **EP 1 865 506 A1**
(43) Date of publication of application: **12.12.2007**
(21) Application number: 05781034.3
(22) Date of filing: 26.08.2005
(51) Int. Cl.: G11B 20/10, H04N 5/91

(54) **RECORDING/REPRODUCING DEVICE AND RECORDING/REPRODUCING METHOD**

(30) Priority: 31.03.2005 JP 2005100457
(71) Applicant: D&M Holdings, Inc., Kanagawa 210-8569 (JP)
(72) Inventor: AKIYAMA, Osamu, c/o D & M Holdings, Inc., Kawasaki-shi, Kanagawa 210-8569 (JP); FUKUSHIMA, Hiroshi, c/o D & M Holdings, Inc., Kawasaki-shi, Kanagawa 210-8569 (JP)
(74) Representative: Hackney, Nigel John
(86) International application number: PCT/JP2005/015541
(87) International publication number: WO 2006/112046

(57) **Abstract**

A recording/reproducing device, enabling transfer (move process) of a content any number of times between devices while keeping the most appropriate high image quality for each device in compliance with copyright protection, includes a content management unit (13) for managing the content data so as to make reproduction of the content data in a recording/reproducing unit (5) impossible simultaneously with transfer when the content data, from which copying is prohibited, is transferred to an external device, and managing the content data in the recording/reproducing device so as to enable the reproduction of the content data in the recording/reproducing device if the content data transferred from the external device has been transferred from the recording/reproducing device to the external device and is now in an irreproducible state in the recording/reproducing device.

## Description

### TECHNICAL FIELD

The present invention relates to a recording/reproducing device and a recording/reproducing method for recording and reproducing a video signal and an audio signal of a received broadcast program on/from a recording medium.

### BACKGROUND ART

There exists a recording/reproducing device which receives broadcast program information transmitted from a TV station to record/reproduce digitalized video signal and audio signal of the received broadcast program content (hereinafter, referred to as content data) on/from a recording medium in the device. The recording/reproducing device records the content data on a recording medium such as a hard disk (HD) in the form of a digital signal and reproduces the content data recorded on the recording medium. As such a recording/reproducing device, there is one that can transfer content data recorded on a recording medium to an external device (for example, a portable reproducing device) connected thereto or one that can transfer content data recorded on a removable recording medium.

If the content data, which is recorded in the form of a digital data as described above, is copied (digitally copied) to another recording medium, maintaining the form of a digital signal, the content data can be copied without deteriorating the image and sound quality. Therefore, in order to protect the copyright of content data, management information such as information for limiting the number of allowable digital copies or information for prohibiting copying is conventionally provided within the content data.

As a conventional recording/reproducing device, a device capable of protecting the copyright of content data to be transferred when the content is transferred to a removable recording medium or an external device is disclosed in, for example, JP-A-2002-238023. In the device disclosed in the Patent Application, after content data recorded on a first recording medium is copied to a removable recording medium or an external device corresponding to a second recording medium, the copied content data is deleted from the first recording medium (hereinafter, referred to as a Move process) . In this manner, the copyright of the content data is protected.

In a conventional recording/reproducing device, when a display function of an external device is not compatible with a resolution of content data transferred from the recording/reproducing device, specifically, a resolution of a video signal of the content data to be transferred to the external device is higher than that which can be reproduced by the external device for transfer of the content recorded on the recording/reproducing device to the removable recording medium or the external device, the resolution of the content data to be transferred is converted to low-resolution content data, which is then transferred to the external device. Generally, this conversion process is irreversible conversion, which involves deterioration.

Even in the case where a resolution is compatible with that of a transfer destination, a conversion process is similarly required when the transfer destination uses a different compression mode. In many cases, this conversion also involves image quality deterioration.

In the conventional recording/reproducing device described above, after a user has viewed content, which is subjected to a conversion process such as a resolution modification to be moved to an external device or a removable recording medium or after the user has finished viewing a part of the content, the content is moved back to the recording/reproducing device in some cases. In this case, according to a conventional method, when the content transferred from the recording/reproducing device to the external device is content data which is converted to low-resolution data, the content that can be transferred back from the external device to the recording/reproducing device becomes low-resolution content data. However, since the content data transferred to the external device is prohibited from being copied due to copyright protection, the content in the recording/reproducing device has already been deleted. Therefore, the content moved back to the recording/reproducing device is the low-resolution content data that was transferred to the external device. According to the conventional method, the low-resolution content data is recorded on the recording medium in the recording/reproducing device.

Therefore, the content, which has a high resolution at the time of the first recording on the recording/reproducing device, is converted to low resolution data after being moved to the removable recording medium or the external device, and then being transferred back to the recording/reproducing device from the removable recording medium or the external device. Thus, for the reproduction of the content, which is moved from the recording/reproducing device to the external device or the removable recording medium and is then moved back to the recording/reproducing device, the content data now having deteriorated image quality as a result of the conversion is reproduced. There is therefore a problem in that images are deteriorated by the conversion process each time they are moved.

### DISCLOSURE OF THE INVENTION

### Problems to be solved by the Invention

The present invention is devised to solve the above-mentioned problems for the purpose of maintaining high-quality viewing of reproduced content so as to be as faithful as possible to the intention of a copyright holder in each environment when the content, for which copyright protection is sought, is repeatedly moved to/from an external device or a recording medium. The present invention has an object to provide a recording/reproducing device and a recording/reproducing method, which are capable of reproducing content as high-resolution content data before conversion to low-resolution content data in the recording/reproducing device, and of protecting and managing the copyright of the content recorded in the recording/reproducing device and transferred to the external device when the high-resolution content converted to the low resolution date is transferred from the recording/reproducing device to the external device or the removable recording medium and is then transferred back from the external device or the removable recording medium to the recording/reproducing device.

### Means for Solving the Problems

To solve the above-mentioned problems, according to the present invention, there is provided a recording/reproducing device, comprising: a receiving unit for receiving content data of a broadcast program; a recording/reproducing unit for recording the content data received by the receiving unit on a recording medium and reproducing the content data recorded on the recording medium; a conversion unit for performing a resolution conversion process on the content data recorded in the recording/reproducing unit; a transfer unit having a function of outputting/inputting the content data output from the conversion unit to/from an external device; and a content management unit for managing the content data recorded in the recording/reproducing unit, in which the content management unit manages the content data so as to make reproduction of the content data in the recording/reproducing unit impossible when the content data, from which copying is prohibited, is transferred to the external device, and to enable the reproduction of the content data in the recording/reproducing unit if the content data transferred from the external device is content data which has been transferred from the recording/reproducing unit to the external device and is now in an irreproducible state in the recording/reproducing unit.

As a result, even in the case where the content which is converted to low-resolution data is transferred from the recording/reproducing device to the external device and is then transferred back from the external device to the recording/reproducing device, the high-resolution content data before the conversion to the low-resolution data can be used for reproduction after the content is moved back to the recording/reproducing device. Therefore, the transfer (move process) of the content can be performed any number of times between the recording/reproducing device and the external device while keeping the most appropriate high image quality for each device in compliance with copyright protection.

Moreover, according to the present invention, since the move process of moving the content from the external device to the recording/reproducing device is performed, not all the data of the content is required to be transferred. Accordingly, the move process of the content can be completed immediately.

Furthermore, if the content data to be transferred from the external device has been transferred from the recording/reproducing unit to the external device and is now in an irreproducible state in the recording/reproducing unit, the recording/reproducing device manages the content data so as to erase the transferred content data in the external device or make the transferred content data irreproducible and enable the reproduction of the content data in the recording/reproducing unit. In this manner, the compliance with copyright for the external device can be perfectly managed.

Furthermore, the recording/reproducing device includes a recording device for converting and recording the content data output from the conversion unit on a removable recording medium. The content management unit manages the content data recorded in the recording/reproducing unit. The content management unit manages the content data so as to transfer the content data and make the reproduction of the content data in the recording/reproducing unit impossible when the content data, from which a copy is prohibited from being created, is transferred to the removable recording medium. The content management unit manages the content data so as to erase the content data in the removable recording medium or to make the content data irreproducible when the content data to be transferred from the removable recording medium to the recording/reproducing unit has been transferred from the recording/reproducing unit and is now in an irreproducible state in the recording/reproducing unit. In this manner, even in the recording/reproducing device including the recording device that performs conversion and recording with respect to the removable recording medium, the content can be moved between the recording/reproducing device and the removable recording medium any number of times while keeping the most appropriate high image quality in compliance with copyright protection.

Further provided is a recording/reproducing method in a recording/reproducing device for receiving content data of a broadcast program, recording the received content data, and reproducing the recorded content data, comprising: performing a resolution conversion process on the recorded and reproduced content data; outputting/inputting the converted content data to/from an external device; managing the recorded and reproduced content data; managing the content data so as to make reproduction of the content data impossible when the content data, from which copying is prohibited, is transferred to the external device; and managing the content data so as to enable the reproduction of the content data in the recording/reproducing device if the content data to be transferred from the external device is content data which has been transferred from the recording/reproducing device to the external device and is now in an irreproducible state in the recording/reproducing device.

As a result, even in the case where the content, which has been converted to low-resolution data, is transferred from the recording/reproducing device to the external device and is then transferred back from the external device to the recording/reproducing device, the high-resolution content data before conversion to the low-resolution content data can be used for reproduction after the content is moved back to the recording/reproducing device. Therefore, the transfer (Move process) of the content can be performed between the recording/reproducing device and the removable recording medium any number of times while keeping the most appropriate high image quality for each device in compliance with copyright protection.

Further provided is a recording/reproducing method further including the step of managing the content data so as to erase the transferred content data in the external device or make the transferred content data irreproducible, and enable the reproduction of the content data in the recording/reproducing device if the content data to be transferred from the external device is content data which has been transferred from the recording/reproducing device to the external device and is now in an irreproducible state in the recording/reproducing method. In this manner, the compliance with copyright for the external device can be perfectly managed.

Further provided is a recording/reproducing method further including the steps of: when converting and recording the converted content data on a removable recording medium, managing the recorded and reproduced content data, and managing the content data so as to transfer the content data to the removable recording medium and make the reproduction of the content data impossible when the content data, from which a copy is prohibited from being created, is transferred to the removable recording medium; and managing the content data so as to erase the content data in the removable recording medium or make the content data irreproducible, and enable the reproduction of the content data in the recording/reproducing device if the content data transferred from the removable recording medium to the recording/reproducing device is content data which has been transferred from the recording/reproducing device and is now in an irreproducible state in the recording/reproducing device. With this recording/reproducing method, even in the recording/reproducing device including a recording device that performs conversion and recording with respect to the removable recording medium, the transfer of the content can be performed between the recording/reproducing device and the removable recording medium any number of times while keeping the most appropriate high image quality for each device in compliance with copyright protection.

### BRIEF DESCRIPTION OF THE DRAWINGS

Fig. 1 is a block diagram illustrating a configuration of a recording/reproducing device of a first embodiment according to the present invention;
Fig. 2 is a flowchart for illustrating an operation of the recording/reproducing device, for transferring content data, in the first embodiment shown in Fig. 1;
Fig. 3 is another flowchart for illustrating the operation of the recording/reproducing device, for transferring the content data, in the first embodiment shown in Fig. 1;
Fig. 4 is a block diagram illustrating a configuration of the recording/reproducing device of a second embodiment according to the present invention;
Fig. 5 is an explanatory view of a mutual transfer procedure of the content data with an external device in the recording/reproducing device of the second embodiment;
Fig. 6 is an explanatory view illustrating an exemplary structure of a process for realizing content management in the recording/reproducing device of the second embodiment;
Fig. 7 is an explanatory view illustrating an example of an envisaged management mode in the recording/reproducing device of the second embodiment;
Fig. 8 is an explanatory view illustrating an example of another management mode in the recording/reproducing device of the second embodiment;
Fig. 9 is a block diagram illustrating an example of a hardware configuration of an external device (PMP) compliant with the recording/reproducing device of the second embodiment;
Fig. 10 is an explanatory view illustrating an example of a structure of a removable recording medium in compliance with copyright management of the recording/reproducing device of the second embodiment (CPRM-compliant DVD-RW);
Fig. 11 is an explanatory view illustrating an example of a content management method compliant with the recording/reproducing device of the second embodiment;
Fig. 12 is an explanatory view illustrating a method of managing a content viewing status, which is compliant with the recording/reproducing device of the second embodiment;
Fig. 13 is an explanatory view of a method of designating a content transfer area, which is compliant with the recording/reproducing device of the second embodiment; and
Fig. 14 is an explanatory view of management of reproduction control after transfer on the side of a video recording device, which is compliant with the recording/reproducing device of the second embodiment.

### BEST MODE FOR CARRYING OUT THE INVENTION

Hereinafter, embodiments of the present invention will be described based on the drawings.

### (First Embodiment)

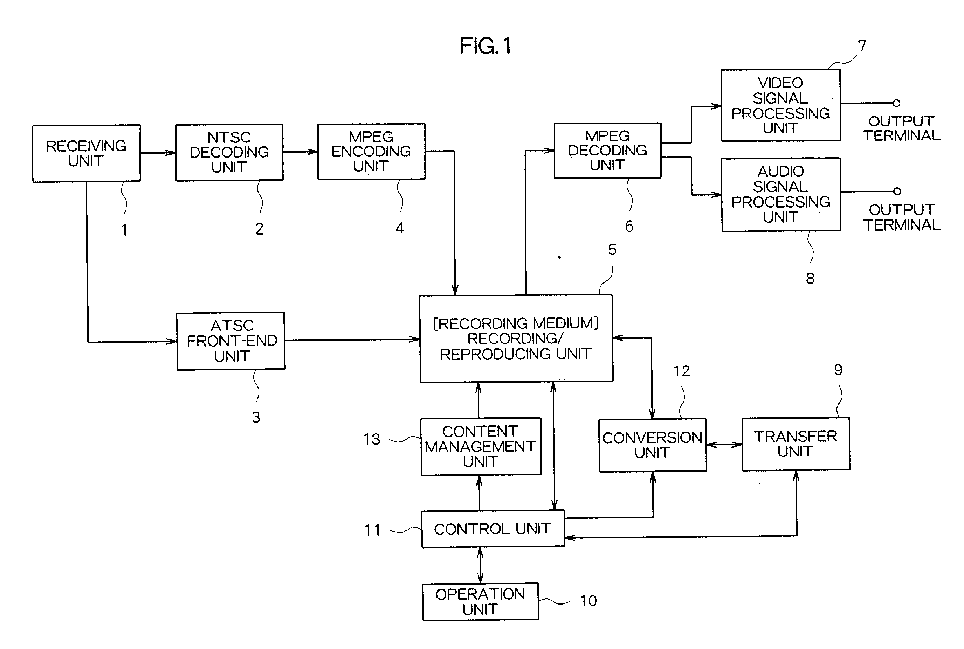

Fig. 1 is a block diagram illustrating a configuration of a recording/reproducing device embodying a first embodiment of the present invention. In Fig. 1, the recording/reproducing device includes: a receiving unit 1; an NTSC (National Television Standards Committee) decoding unit 2; an ATSC (Advanced Television Systems Committee) front-end unit 3 ; an MPEG (Moving Picture Experts Group) encoding unit 4; a recording/reproducing unit 5; an MPEG decoding unit 6; a video signal processing unit 7; an audio signal processing unit 8; a transfer unit 9; an operation unit 10; a control unit 11; a conversion unit 12; and a content management unit 13.

The receiving unit 1 shown in Fig. 1 receives broadcast program information of analog television broadcasting or digital television broadcasting. The receiving unit 1 outputs content data of the received broadcast program information of the analog television broadcasting to the NTSC decoding unit 2. The receiving unit 1 also outputs the received content data of the digital television broadcasting, which is compressed according to the MPEG system, to the ATSC front-end unit 3.

The NTSC decoding unit 2 converts the input content data to digital data, demodulates the digital data to content data according to the NTSC system (digital video signal and digital audio signal), and then outputs the demodulated content data to the MPEG encoding unit 4. The ATSC front-end unit 3 converts the input content data to bitstream data and then outputs the converted data to the recording/reproducing unit 5. The MPEG encoding unit 4 performs a compression process on the content data input from the NTSC decoding unit 2 according to an MPEG system compression algorithm.

The recording/reproducing unit 5 includes a recording medium such as an HD and records the content data compressed according to the MPEG system, which is input from the ATSC front-end unit 3 and the MPEG encoding unit 4, on the recording medium. The recording/reproducing unit 5 reproduces the content data recorded on the recording medium by control of the control unit 11.

The MPEG decoding unit 6 performs a process of decompressing the content data reproduced from the recording/reproducing unit 5 according to an MPEG system decompression algorithm. The decompressed digital video signal is output to the video signal processing unit 7, whereas the decompressed digital audio signal is output to the audio signal processing unit 8.

The video signal processing unit 7 converts the digital video signal to an analog signal and then performs a process such as emphasis on the analog signal. The audio signal processing unit 8 converts the digital audio signal to an analog signal and then performs a process such as amplification. The video signal and the audio signal converted to the analog signals are output from a display device and a speaker (both not shown), respectively, connected to output terminals.

The transfer unit 9 serves as an interface (for example, a USB and the like) connected to an external device (for example, a portable reproducing device), for transferring the content data between the recording/reproducing device according to this embodiment and the external device. Upon connection of the external device, the transfer unit 9 inputs information of the external device (for example, resolution information, identification information and the like) from the connected external device. The input information of the external device is input to the control unit 11. The recording/reproducing device in this embodiment can transfer the content data recorded in the recording/reproducing unit 5 to the external device connected to the transfer unit 9 and can also record the content data transferred from the external device in the recording/reproducing unit 5.

The operation unit 10 includes a display section for displaying an operation button for operating the recording/reproducing device of this embodiment and the contents of an operation by the operation button. The operations include recording of the received content data on the recording medium, reproduction of the content data recorded on the recording medium, and selection of the content data to be transferred. The control unit 11 controls operation of the whole device, such as recording of the content data on the recording medium, reproduction of the content data recorded on the recording medium, transfer of the content data and the like, according to an operation instruction from the operation unit 10. The control unit 11 also authenticates the external device connected to the transfer unit 9 based on the information of the external device input from the transfer unit 9.

The conversion unit 12 converts a resolution of the content data to be transferred to the external device to low resolution data by control of the control unit 11 and then outputs the converted content data to the transfer unit 9. The control unit 11 controls the conversion unit 12 based on the resolution or data size of the content data to be transferred and the information of the external device, which is input from the transfer unit 9.

The content management unit 13 manages the content data recorded in the recording/reproducing unit 5. Upon transfer of the content data recorded in the recording/reproducing unit 5 to the external device, the content management unit 13 manages the content data as irreproducible content data without erasing the content data from the recording/reproducing unit 5 so that the recording/reproducing unit 5 cannot reproduce the transferred content data. The content management unit 13 includes a content information storage section (not shown), and for each content data recorded in the recording/reproducing unit, stores information regarding the content (hereinafter referred to as content information) such as information indicating whether the content data is reproducible or irreproducible, file name information of the content data and information of the external device corresponding to a transfer destination of the content data in the content information storage section.

When the content data is transferred from the external device connected to the transfer unit 9, the content management unit 13 compares the information such as the information of the external device and the file name of the content data to be transferred with the content information stored in the content information storage section described above to determine whether or not the content data transferred from the external device is managed as the irreproducible content data.

When the content information of the content data transferred from the external device is identical with the information stored in the content information storage section, the content management unit 13 determines that the content data is managed as irreproducible content data and rewrites the content information so as to make the irreproducible content data reproducible. When the information regarding the content data transferred from the external device (the information such as the information of the external device or the file name) is not identical with the information stored in the content information storage section, the content management unit 13 determines that the content data is not managed as irreproducible content data and adds the content information of the content data transferred from the external device.

The content management unit 13 has been described above as a unit separated from the control unit 11. However, the content management unit 13 can also be considered as a part of the control unit 11.

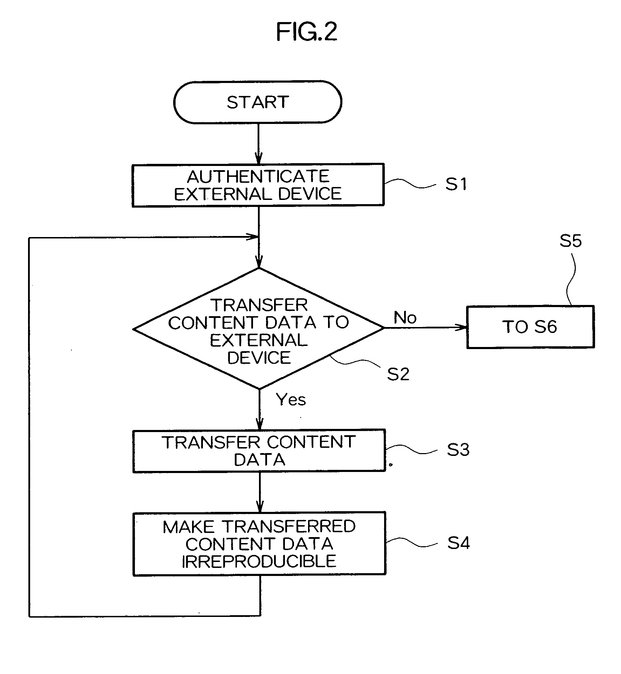

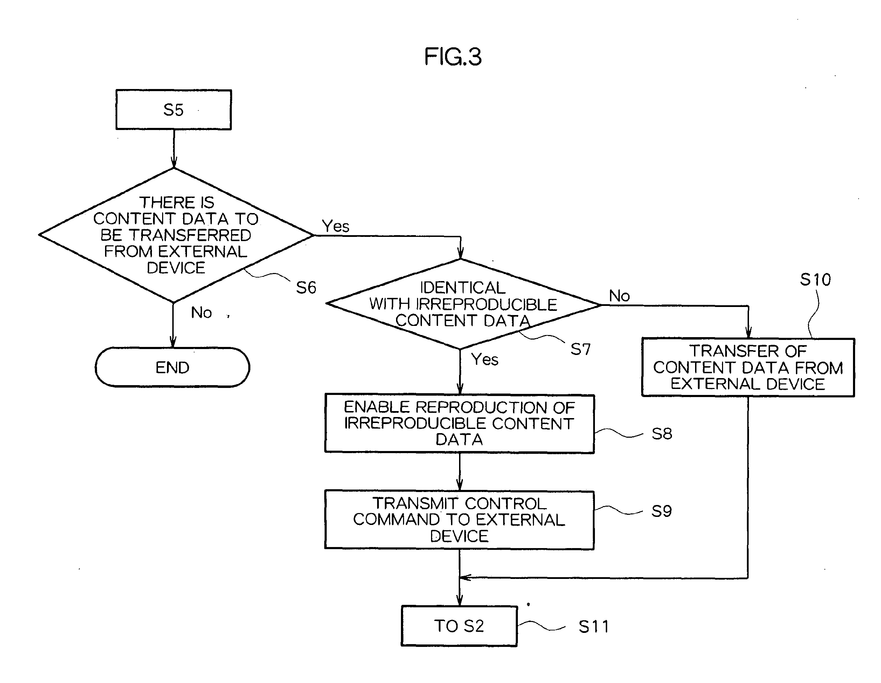

Next, an operation of the recording/reproducing device in this embodiment, for transferring the content data, will be described. Figs. 2 and 3 are flowcharts, each illustrating the content data transfer operation of the recording/reproducing device in this embodiment.

In Step S1 shown in Fig. 2, the control unit 11 performs controls to authenticate the external device connected to the transfer unit 9. The control unit 11 authenticates the external device connected to the transfer unit 9 based on the information of the external device, which is input from the transfer unit 9.

In Step S2, the control unit 11 determines whether or not the content data is to be transferred to the external device. Under the control of the control unit 11, the display section of the operation unit 10 displays the file name of the transferable (reproducible) content data and does not display the file name of the content data which is transferred to the external device and is made irreproducible by the content management unit 13. Therefore, a user can operate the operation unit 10 to select the transferable content data displayed on the display section. The control unit 11 determines whether or not the content data is to be transferred to the external device based on the presence/absence of an operation instruction of transferring the content data selected by the user from the operation unit 10. If the content data is transferred to the external device, the operation proceeds to Step S3. If the content data is not transferred to the external device, the operation proceeds to Step S5.

In Step S3, the content data selected in Step S2 is transferred to the external device. The control unit 11 controls the recording/reproducing unit 5 to read out the content data selected in Step S2 and to output the read content data to the conversion unit 12. The control unit 11 controls the conversion unit 12 so that the resolution of the content data to be transferred is compliant with that of the external device corresponding to the transfer destination based on the information of the external device, which is input in Step S1. The conversion unit 12 converts the resolution of the content data to be transferred to the external device to a low resolution under the control of the control unit 11 and outputs the obtained low-resolution content data to the transfer unit 9. The external device stores the content data transferred from the recording/reproducing device according to this embodiment on the recording medium so as to be capable of reproducing the content data recorded on the recording medium.

In Step S4, the content management unit 9 makes the content data transferred to the external device irreproducible. The content management unit 13 makes the content data, which has been transferred to the external device in Step S3, irreproducible so that the content data cannot be reproduced by the recording/reproducing unit 5. In Step S5, the operation proceeds to Step S6 in the flowchart shown in Fig. 3.

In Step S6 shown in Fig. 3, the control unit 11 determines whether or not there is any content data to be transferred from the external device. Upon input of a command of transferring the content data from the external device to the recording/reproducing device of this embodiment, the control unit 11 determines that the content data will be transferred from the external device. If there is any content data to be transferred from the external device, the operation proceeds to Step S7. If no content data is to be transferred from the external device, the operation of the recording/reproducing device according to this embodiment, for transferring the content data, is terminated.

In Step S7, the content management unit 13 determines whether or not the content data transferred from the external device is managed as irreproducible content data. Upon transfer of the content data from the external device connected to the transfer unit 9, the content management unit 13 compares information such as the information of the external device, which is input from the external device, and the information of the file name of the content data to be transferred, with the content information stored in the content information storage section to determine whether or not the content data transferred from the external device is managed as irreproducible content data. If the content data to be transferred from the external device is managed as irreproducible content data, the operation proceeds to Step S8. If the content data to be transferred from the external device is not managed as irreproducible content data, the operation proceeds to Step S10.

In Step S8, the content management unit 13 manages the content information so as to make the irreproducible content data reproducible. When the content management unit 13 determines in Step S7 that the content data to be transferred from the external device is managed as being irreproducible, the content management unit 13 rewrites the content information to make the irreproducible content data reproducible.

In Step S9, the control unit 11 performs control to transmit a control command causing the external device to stop the transfer of the content data, from the transfer unit 9. At this time, the control unit 11 transfers a control command for terminating the transfer of the content data to the external device. The external device deletes the content data to be transferred from the recording medium in the external device or makes the content data unavailable in the external device.

In Step S10, the transfer of the content data is started from the external device. The control unit 11 performs control so as to record the content data transferred from the external device in the recording/reproducing unit 5. Through Step S11, the operation returns to Step S2 in the flowchart shown in Fig. 2.

In the recording/reproducing device described above according to this embodiment, in the content data recorded in the recording/reproducing unit 5, the file name of the content data which has been transferred to the external device to be made irreproducible by the content management section 13 is not displayed on the display section, whereas the file name of the content data which has not been transferred to the external device is displayed on the display section. Therefore, the user selects only the content data that has not been transferred to the external device to perform an operation of reproducing or transferring the content data to the external device. Thus, since the content management unit 13 of the recording/reproducing device according to this embodiment manages the content data transferred to the external device so that the content data cannot be reproduced from the recording/reproducing unit 5, the copyright of the content data transferred to the external device can be protected.

Moreover, in the recording/reproducing device according to this embodiment, in the case where the content data converted to a low-resolution data is transferred to the external device and is then transferred back from the external device to the recording/reproducing device, the high-resolution content data before being converted to the low-resolution data is recorded in the recording/reproducing unit 5 as irreproducible content data. Therefore, the content information in the content information storage section is rewritten so as to make the irreproducible high-resolution content data reproducible. Therefore, even when low-resolution content data is to be transferred from the external device, the recording/reproducing device according to this embodiment can use the high-resolution content data before the conversion to the low-resolution as the content data. Accordingly, the image quality of the content data can be prevented from being deteriorated due to the conversion of the resolution for transfer.

### (Second Embodiment)

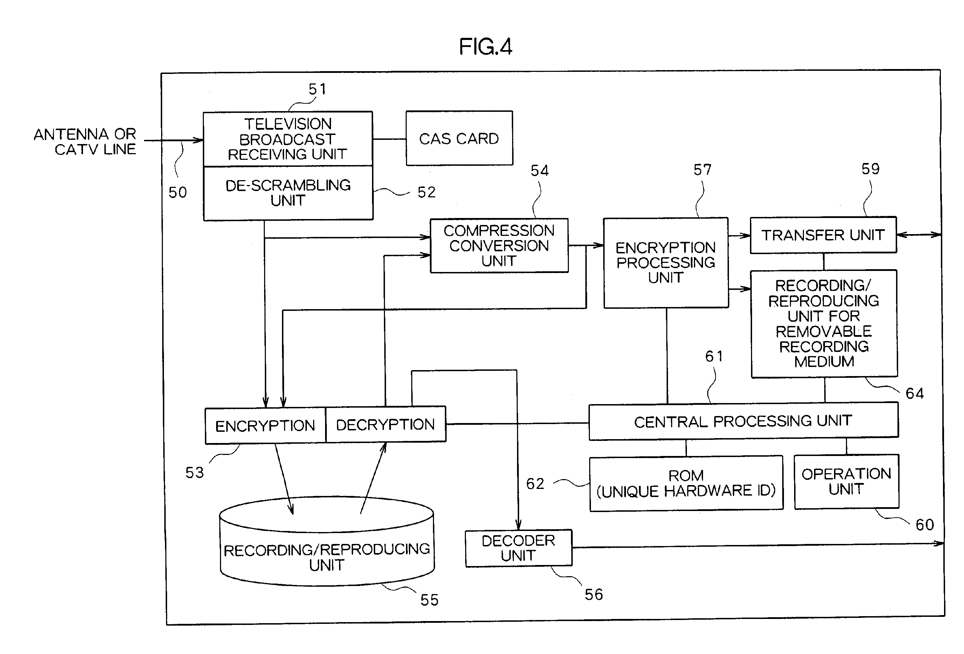

In the description of the second embodiment, parts corresponding to the structure of the first embodiment are basically denoted by the reference numerals obtained by adding 50 to those of the structure of the first embodiment. Fig. 4 is a block diagram illustrating a hardware configuration of the recording/reproducing device corresponding to the second embodiment of the present invention. In Fig. 4, the recording/reproducing device includes a television broadcast receiving unit 51 for receiving radiowaves 50 from an antenna or a CATV line, a de-scrambling unit 52, an encrypting/decrypting unit 53 for a recording/reproducing unit 55, an MPEG (Moving Picture Experts Group) compression conversion (TransCode or Decode + Encode) unit 54, the recording/reproducing unit 55, an MPEG decoder unit 56, an encryption processing unit 57 for copyright protection, a transfer unit 59 for communication with and transfer to an external device, a central processing unit (CPU) 61 including a content management section, an operation unit 60, a ROM 62 including a unique hardware ID, and a recording/reproducing unit 64 of a removable recording medium.

The television broadcast receiving unit 51 shown in Fig. 4 receives analog television broadcasting or digital television broadcasting and broadcast program information. If the received television broadcast program is scrambled, the receiving unit 51 encrypts the content data that has been descrambled in the de-scrambling unit 52 based on subscription information, encrypts in the encrypting/decrypting unit 53 and then records the encrypted content data in the recording/reproducing unit 55 including an embedded recording medium. When the decrypted content data or the content data which is read out after being recorded in the recording/reproducing unit is to be transferred to the external device or moved to the removable recording medium, the content data is passed through the compression conversion unit 54 to be compressed to a format allowed by a transfer destination. If the copyright of the content to be transferred is required to be protected, the content data is output after being encrypted in the encryption processing unit 57. The MPEG decoder unit 56 decodes the received content data of the digital television broadcasting to a video image and sound, and then reproduces and outputs the obtained video image and sound.

The de-scrambling unit 52 corresponding to a conditional access control unit descrambles a program that is scrambled for restricted reception based on a subscription condition set in a CAS (Conditional Access System) card or an OpenCable (registered trademark) POD (Point of Deployment) module, and converts the descrambled program to content data in a digital format that can be decoded by the MPEG decoder unit 56.

The recording/reproducing unit 55 includes a recording medium such as an HD. The content data, which is received by the television broadcast receiving unit 51 and then descrambled by the de-scrambling unit 52, is encrypted by the encrypting/decrypting unit 53 for the copyright protection and is then recorded on the recording medium in the recording/reproducing unit 55. In this manner, if the device happens to function incorrectly so as to directly read the recording medium, the copyright of the recorded content can be protected because the content is encrypted. The information read out from the recording/reproducing unit 55 for reproduction and transfer reproduces the data of the content recorded on the recording medium in the recording/reproducing unit 55 in a state before the encryption in the encrypting/decrypting unit 53, specifically, as the content data through the encrypting/decrypting unit 53 by the control of the central processing unit 61.

The MPEG decoder unit 56 performs a process of decompressing the content data reproduced from the recording/reproducing unit 55 according to an MPEG method decompression algorithm. Decompressed digital video image and audio signal are output from the device to be output from a display device and a speaker (both not shown), respectively, connected to output terminals for user's viewing.

The compression conversion unit 54 converts the high-resolution content data compressed in the system such as MPEG to a low-resolution image or to content data in a system at a higher degree of compression, for conversion to a format that allows the use of the external device or the removable recording medium. For this process, a large number of methods have already been devised. For example, digital video image and audio signal are converted to analog signals in the device. The analog signals are digitized and are then compressed again in a different system, thereby enabling compression format conversion.

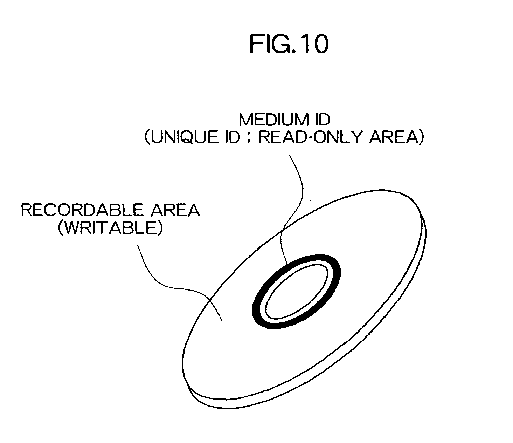

In the case where the content, for which the copyright protection is sought, is moved to the external device or the removable recording medium, the encryption processing unit 57 encrypts the data to be output according to a system determined based on CPRM, for example. A recording medium compliant with the system has already been made commercially available. A structure as illustrated in Fig. 10 makes perfect copying impossible and enables the individual identification of each disc.

The transfer unit 59 includes a physical interface (for example, a USB or the like) which is connected to an external device (for example, a portable reproducing device) for transferring the content between the recording/reproducing device according to this embodiment and the external device. Upon connection of the external device, the transfer unit 59 obtains information of the external device (for example, resolution information, individual identification information and the like) from the connected external device. The obtained information of the external device is input to the central processing unit 61. The recording/reproducing device in this embodiment can transfer the content recorded in the recording/reproducing unit 55 to the external device connected to the transfer unit 59, and can also record the content data transferred from the external device in the recording/reproducing unit 55.

The operation unit 60 includes a display section for displaying an operation button for operating the recording/reproducing device of this embodiment and the contents of the operation by the operation button. The operations include recording of the received content data on the recording medium, reproduction of the content data recorded on the recording medium, and selection of the content data to be transferred. The central processing unit 61 controls operations of the whole device, such as recording of the content data on the recording medium, reproduction of the content data recorded on the recording medium, transfer of the content data and the like, according to an operation instruction from the operation unit 60. The central processing unit 61 also authenticates the external device connected to the transfer unit 59 based on the individual information of the external device obtained from the external device through the transfer unit 59.

The central processing unit 61 controls the compression conversion unit 54 to convert a resolution of the content data to be transferred to the external device to a low resolution for output from the transfer unit 59. The central processing unit 61 controls the compression conversion unit 54 to convert the resolution or the data size of the content data to be transferred based on the information of the external device input from the transfer unit 59.

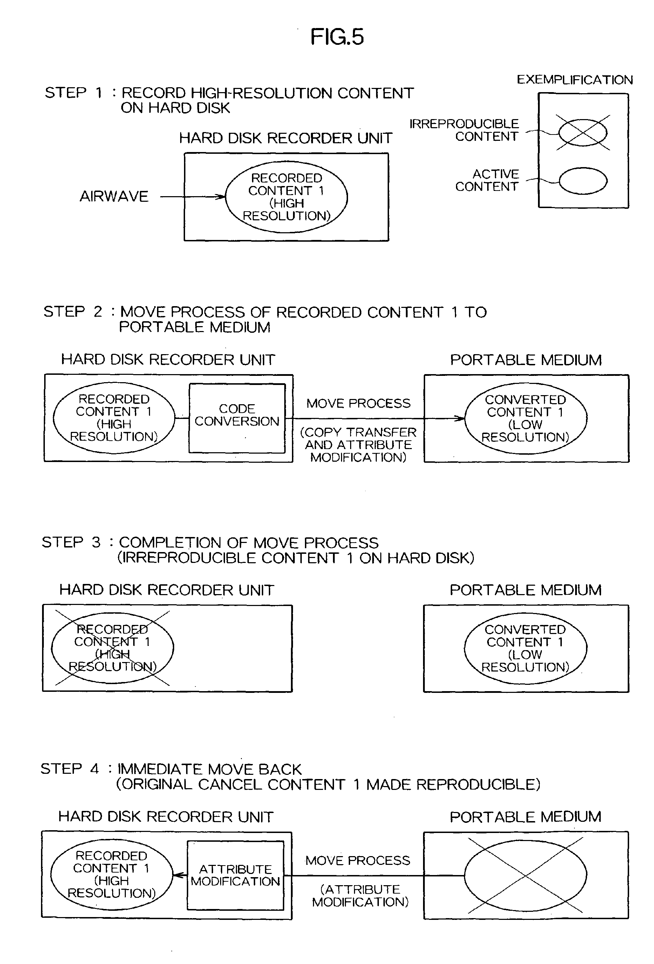

Fig. 5 illustrates an example of a procedure of transfer from the recording/reproducing device to the external device.

First, in Fig. 5, the recording/reproducing device (exemplified as a hard disk recorder unit in the drawing) that has received a broadcast wave records the content data (content 1) on a recording medium (Step 1) . The recorded data is high-resolution data compatible with a broadcast signal.

In this example, in the case where a so-called move process is performed on the recorded content data to the external device (a portable medium in the drawing), the transfer of the recorded content data at a low resolution to the external device and the attribute modification of the original data recorded in the recording/reproducing device are performed (Step 2). The content data is compressed (is subjected to code conversion) in the recording/reproducing device according to a transfer speed, a recording capacity of the external device and the like, and then transferred to the external device at a relatively low resolution. Therefore, the content data is recorded in the external device at a relatively low resolution.

On the other hand, in this example, the original data recorded in the recording/reproducing device is not erased as in the case of a conventional device but is stored in the recording medium in an irreproducible state (Step 3). When the same data recorded in the external device is transferred (so-called moved back) to the recording/reproducing device, the recording/reproducing device verifies that the content data which has been moved to the same external device, and places management information (attribute information) of the data, stored in the irreproducible state, in a reproducible state. Specifically, actual data transfer (move process) from the external device is not required. As a result, the content 1 immediately becomes reproducible in the recording/reproducing device without any standby time (transfer process time). Furthermore, the data recorded in the external device has a low resolution. However, the data can be reproduced in the original state (at a high resolution) in the recording/reproducing device.

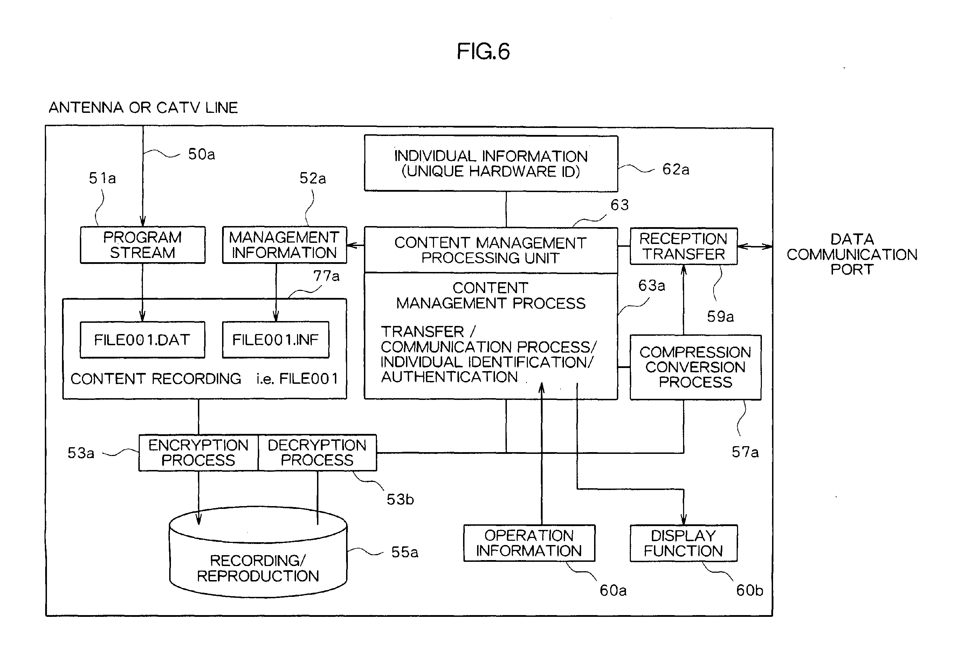

Fig. 6 is an explanatory view showing an exemplary configuration of a process for realizing content management in the recording/reproducing device according to this embodiment. The processes corresponding to those of the structure shown in Fig. 4 are denoted by the same reference numerals but with small alphabetic letters.

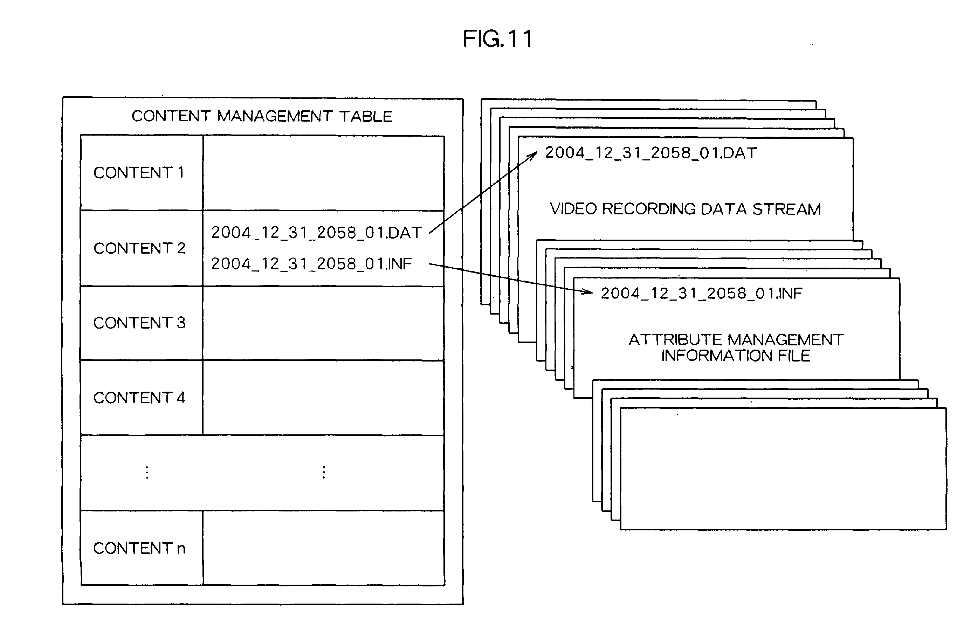

A content management process executed in the content management processing unit 63 in Fig. 6 manages the content data recorded in the recording/reproducing unit 55 in a structure of a content management table, for example, as illustrated in Fig. 11. In the content management process, when the content recorded in the recording/reproducing unit 55, for which copyright protection is sought, is to be transferred to the external device, the content data is not erased from the recording/reproducing unit 55. Instead, a management attribute of the content data is managed as irreproducible content so that the recording/reproducing unit 55 cannot reproduce the content that has already been transferred.

The content management process establishes, for example, the content management information table illustrated in Fig. 11. For each content data recorded in the recording/reproducing unit 55, attribute management information regarding the content (hereinafter referred to as content management information) such as information indicating whether or not the content data is reproducible, content data file name information and individual information of the external device, to which the content data has been transferred, is stored in the content information storage section.

When the content data is transferred from the external device connected to the transfer unit 59, the content management process compares the management attribute information such as the information of the external device, the file name of the content data to be transferred with hardware individual information and the above-mentioned content management information data, to determine whether or not the content data transferred from the external device is managed as irreproducible content data in the recording/reproducing device.

An example of the determination process will be described below with reference to Fig. 3 corresponding to the flowchart used in the first embodiment.

If the content information of the content data transferred from the external device is identical with the information stored in the content information storage section, the content management process determines that the content data is managed as irreproducible. Then, the content management process rewrites the content management information so as to make the content unavailable on the external device side and, at the same time, make the irreproducible content data in the recording/reproducing device reproducible. In the content management process, if the information regarding the content transferred from the external device (management information such as information of the external device and the file name) is not identical with the information stored in the content information storage section, it is determined that the content is not managed as irreproducible content data. Then, the content data transferred from the external device is additionally recorded in a recording section of the recording/reproducing unit 55 as new content. Simultaneously, a process of making the transferred content irreproducible or deleting the transferred content is performed on the external device side.

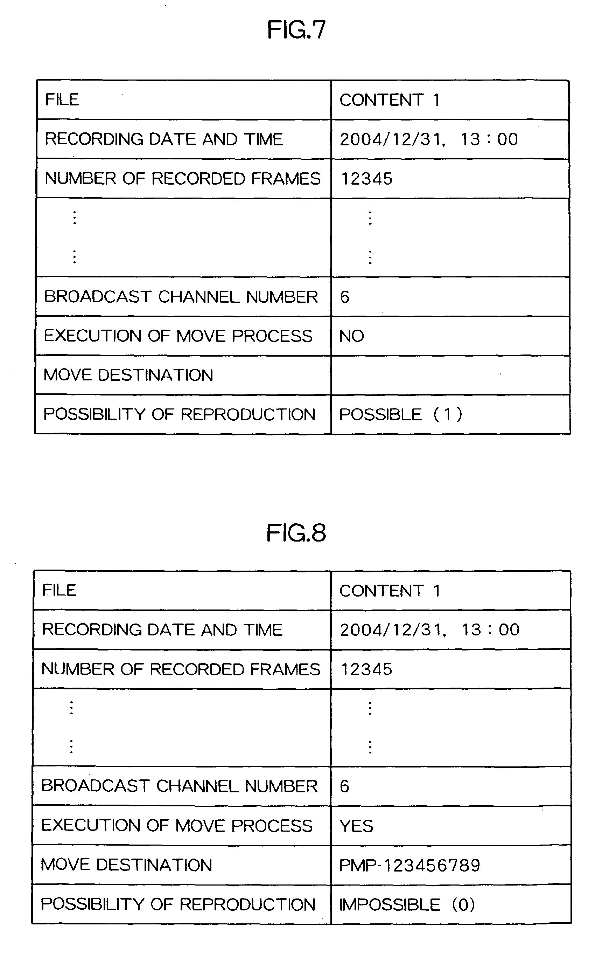

In an example of the method of managing a reproducible/irreproducible state for each content, in the data management structure as illustrated in Fig. 11, for example, a field (flag) indicating whether a content reproducing operation can be performed or not is created in the content attribute information management data as shown in Figs. 7 and 8. The management process is performed so as to make the content irreproducible if a value in the field indicates that reproduction is impossible (for example, '0') as shown in Fig. 8, and make the content reproducible if a value in the field indicates that the reproduction is possible (for example, '1') as shown in Fig. 7. In this manner, the reproduction management for each content can be realized.

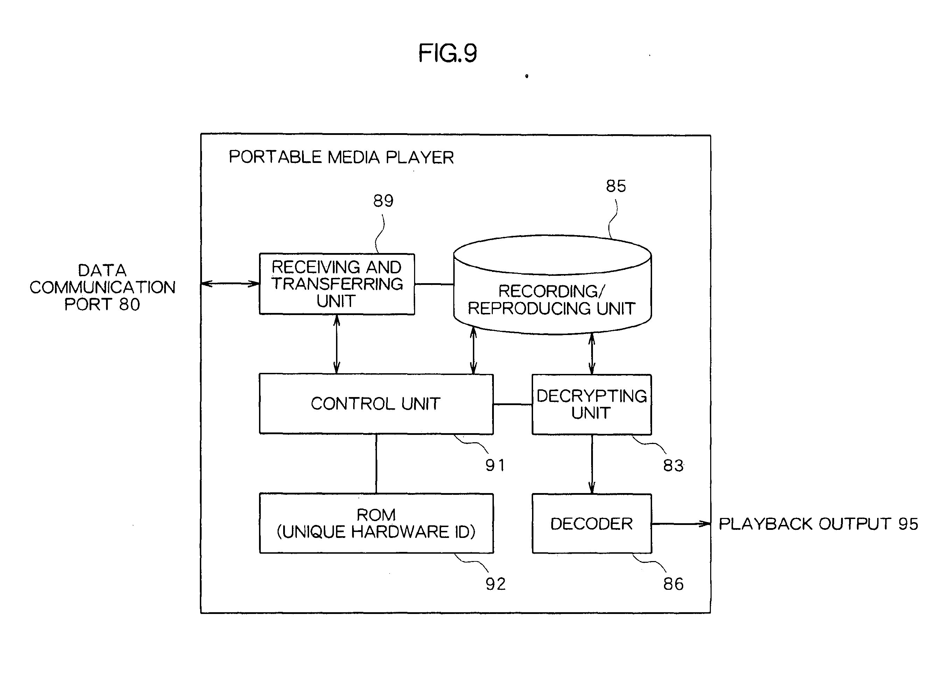

Fig. 9 is a block diagram showing an example of a hardware configuration of the external device (in this case, a portable media player) compliant with the recording/reproducing device according to this embodiment.

The external device in this example includes a data communication port 80 for receiving and transferring the content data with/to the exterior. Through the data communication port, data and information are received from and transferred to the exterior in a receiving/transferring unit 89. A recording/reproducing unit 85 records the information. In response to content management control from a control unit 91, the recording/reproducing unit 85 transfers and reproduces the data according to an instruction. The reproduction is output as a playback output 95 through a decrypting unit 83 and a decoder unit 86 to be transferred to a display device, a speaker or the like. The external device includes a ROM 92 having a unique hardware ID. A content management processing section of the control unit 91 controls the reception, transfer and reproduction of the content and the like.

Next, an operation of the recording/reproducing device according to this embodiment, for transferring the content data, will be described. Figs. 2 and 3, which are flowcharts used in the first embodiment, also serve as flowcharts for illustrating the content data transfer operation of the recording/reproducing device according to this second embodiment.

In Step S1 shown in Fig. 2, the central processing unit 61 performs control to authenticate the external device connected to the transfer unit 59. The content management processing section 63 in Fig. 6 authenticates the external device connected to the transfer unit 59 based on the information (hardware ID) of the external device, which is input from the transfer unit 59.

In Step S2 shown in Fig. 2, the content management processing unit 63 in Fig. 6 determines whether or not the content data is to be transferred to the external device. Under the control of the content management processing section 63, a display function 60b corresponding to one function of the operation unit 60 displays the file name of the transferable (reproducible) content in a selectable (active) state, and does not display the file name of the content data that has been transferred to the external device to be made irreproducible by the content process, or display the file name, but instead makes the selection of the reproduction operation impossible. Therefore, a user can operate the operation unit 60 only for the content that has not been transferred to select the transferable content displayed by the display function 60b from a list. The central processing unit 61 (content management processing section 63) determines whether or not the content data is to be transferred to the external device based on the presence/absence of an operation instruction of transferring the content selected by the user on the operation unit 60 to the external device. If the content data is transferred to the external device, the operation proceeds to Step S3. If the content data is not transferred to the external device, the operation proceeds to Step S5.

In Step S3, the content data selected in Step S2 is transferred to the external device. The central processing unit 61 (the content management processing section 63) controls the recording/reproducing unit 55 to read out the content data selected in Step S2 and then controls the read content data to be output from the transfer unit 59 to the external device. The central processing unit 61 (the content management processing section 63) uses the information of the external device obtained in Step S1 to control a compression conversion process of converting the resolution of the content data to be transferred to a low resolution so that the resolution of the content data is compliant with the resolution available to the transfer destination external device. Furthermore, an encryption process is performed in the encryption processing unit 57 for the protection of the copyright of the converted content data. The converted content data is output from the transfer unit 59 by the control of the central processing unit 61 (the content management processing unit 63). The external device stores the content data transferred from the recording/reproducing device according to this embodiment on a recording medium so as to be able to reproduce the content data recorded on the recording medium.

In Step S4, the content data that has been transferred to the external device in the content management process is made irreproducible. The content management processing section 63 makes attribute data in management information 52a (Fig. 8) of the content that has been transferred to the external device in Step S3 irreproducible, so as to prevent transfer to the exterior or a reproduction operation. Through Step S5, the operation proceeds to Step S6 of the flowchart shown in Fig. 3. At this time, for example, a unique hardware ID (individual identification information) of the external device to which the content data has been transferred, a medium ID, the number of bytes in the transferred file, a checksum value, a transfer execution time and the like are recorded all together in the attribute management data as information for identifying the transfer destination. As a result, a target device can be identified without fail in the following external device authentication step.

In Step S6 shown in Fig. 3, the central processing unit 61 (the content management processing section 63) determines whether or not there is any content data to be transferred from the external device. Upon input of a request for transferring the content data from the external device to the recording/reproducing device according to this embodiment, the central processing unit 61 determines that the external device is going to transfer the content. If there is any content data to be transferred from the external device, the operation proceeds to Step S7. If no content data is to be transferred from the external device, the transfer operation of the content data to the recording/reproducing device according to this embodiment is terminated.

In Step S7, the content management processing section 63 determines whether or not the content data transferred from the external device is managed as irreproducible content data. In the content management process, when the content data is transferred from the external device connected to the transfer unit 59, the individual information of the external device such as a hardware ID or a media ID input from the external device, and information such as a file name of the content data to be transferred, are compared with transfer history information and the content management information stored in the content information storage section to determine whether or not the content data transferred from the external device is managed as irreproducible content data. If the content data transferred from the external device is managed as irreproducible content data, the operation proceeds to Step S8. If the content data transferred from the external device is not managed as irreproducible content data, the operation proceeds to Step S10.

In Step S8, the content management information is updated so as to enable the reproduction of the content data that has been made irreproducible by the content management process in Fig. 8. In the content management process, when it is determined that the content data transferred from the external device is managed as irreproducible content data in Step S7, the content management information is rewritten so as to enable the reproduction of the management information data of the irreproducible content.

In Step S9, the central processing unit 61 transmits a control command for terminating the transfer of the content data from the external device via the transfer unit 59 to the external device. Upon input of the control command of terminating the transfer of the content data, the external device terminates the transfer of the content data to the recording/reproducing device according to this embodiment, and then erases the transferred content from the recording medium or makes the transferred content unavailable, regarding the transfer as completed.

In Step S10, the transfer of the content data is started from the external device. In a content management process 63a of the content management processing unit 63 in Fig. 6, the content data transferred from the external device is controlled so as to be recorded in the recording/reproducing unit 55. Through Step S11, the operation proceeds to Step S2 in the flowchart shown in Fig. 2.

In the recording/reproducing device according to this embodiment described above, among the contents recorded in the recording/reproducing unit 55, the file name of the content data which has been transferred to the external device to be made irreproducible by the content management process 63a is not displayed by the display function 60b. Only the file name of the content data transferable to the external device is displayed by the display function 60b. Therefore, the user can perform an operation of selecting only the content data that has not been transferred to the external device to reproduce or transfer the selected content data to the external device. By this mechanism, the copyright can be protected. Therefore, since the content management processing unit 63 manages the content transferred to the external device so that the content can be reproduced only on the external device side, the recording/reproducing device of this embodiment can protect the copyright of the content data transferred to the external device.

Moreover, in the recording/reproducing device according to this embodiment, in the case where the content data converted to low-resolution data is transferred to the external device and then transferred back from the external device to the recording/reproducing device, the high-resolution data before conversion to the low-resolution data remains in the recording/reproducing unit 55 as irreproducible information. Therefore, the content management information in the content information storage section is rewritten so that the high-resolution content data managed as being irreproducible can be reproduced. Thus, in the recording/reproducing device according to this embodiment, even in the case where the low-resolution content data is transferred back from the external device, the high-resolution data before conversion to the low-resolution data is available as the content data. Accordingly, a problem where the content data having deteriorated image quality is viewed as a result of the conversion of the resolution for transfer can be avoided.

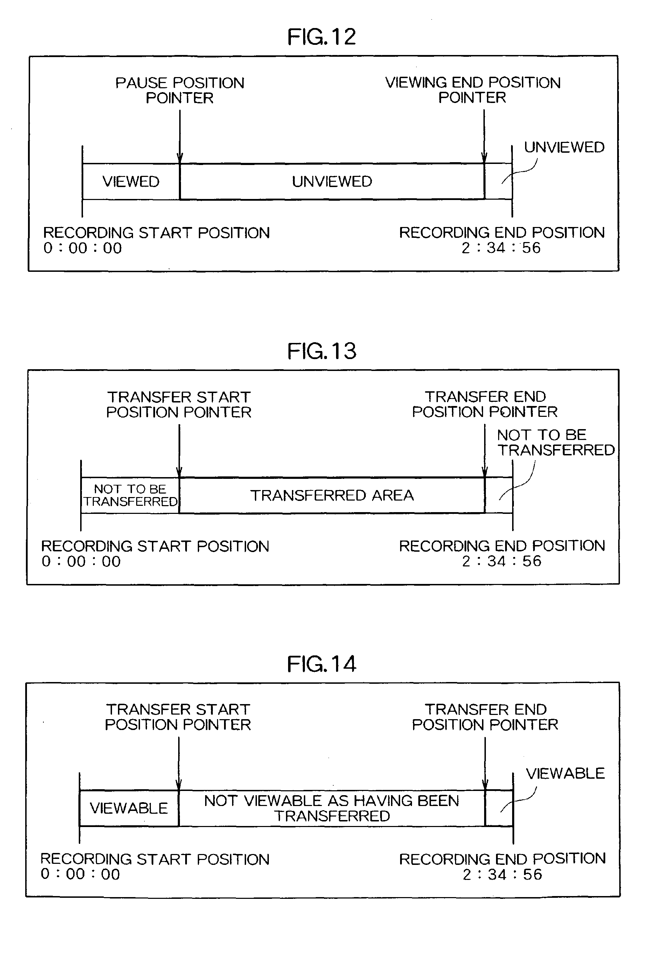

Furthermore, by more strictly performing such a management method, when only a part of the recorded content, for which copyright protection is sought, is to be transferred to the external device, for example, as illustrated in Figs. 12 to 14, the untransferred remaining part of the content can be managed in a viewable state. Specifically, a start point and an end point of an unviewed section of the content that is being viewed are managed as independent elements so as to more strictly perform the management in the content move process. For example, for the content that has been partially viewed in the recording/reproducing device, an unviewed section is managed with a pause pointer and a viewing end position pointer. In the move process, for the content, the unviewed section is transferred to the external device (Fig. 13). At this time, a transferred part (unviewed part) is made irreproducible (unviewable), whereas an untransferred part (viewed part) is made reproducible (Fig. 14). By such a structure, for example, after having viewed a part of the content data recorded in a home recording/reproducing device, a user can view the remaining part by using an external device when the user is away from home. At this time, even in the case where the data is moved back from the external device to the recording/reproducing device, move-back is immediately completed to keep the original resolution in the recording/reproducing device.

### INDUSTRIAL APPLICABILITY

The present invention has considerably wide industrial applicability as a recording/reproducing device and a recording/reproducing method for recording and reproducing a video signal and an audio signal of a received broadcast program on/from a recording medium, which can transfer (perform a move process for) content data between the recording/reproducing device and an external device while keeping the most appropriate high image quality for each device in compliance with copyright protection.

## Claims

1. A recording/reproducing device, comprising:
a receiving unit for receiving content data of a broadcast program;
a recording/reproducing unit for recording the content data received by the receiving unit on a recording medium and reproducing the content data recorded on the recording medium;
a conversion unit for performing a resolution conversion process on the content data recorded in the recording/reproducing unit;
a transfer unit having a function of outputting/inputting the content data output from the conversion unit to/from an external device; and
a content management unit for managing the content data recorded in the recording/reproducing unit,
wherein the content management unit manages the content data so as to make reproduction of the content data in the recording/reproducing unit impossible for transfer when the content data, from which copying is prohibited, is transferred to the external device, and enable the reproduction of the content data in the recording/reproducing unit if the content data transferred from the external device is content data which has been transferred from the recording/reproducing unit to the external device and is now in an irreproducible state in the recording/reproducing unit.

2. A recording/reproducing device according to Claim 1, wherein the content data is managed so as to erase the transferred content data in the external device or make the transferred content data irreproducible, and enable the reproduction of the content data in the recording/reproducing unit if the content data to be transferred from the external device is content data which has been transferred from the recording/reproducing unit to the external device and is now in an irreproducible state in the recording/reproducing unit.

3. A recording/reproducing device according to Claim 1, further comprising a recording device for converting and recording the content data output from the conversion unit on a removable recording medium,
wherein the content management unit manages the content data recorded in the recording/reproducing unit, and the content management unit manages the content data so as to transfer the content data to the removable recording medium, and make the reproduction of the content data in the recording/reproducing unit impossible when the content data, from which a copy is prohibited from being created, is transferred to the removable recording medium, while managing the content data so as to erase the content data in the removable recording medium or to make the content data irreproducible and enable the reproduction of the content data in the recording/reproducing unit if the content data transferred from the removable recording medium to the recording/reproducing unit is content data which has been transferred from the recording/reproducing unit and is now in an irreproducible state in the recording/reproducing unit.

4. A recording/reproducing method in a recording/reproducing device for receiving content data of a broadcast program, recording the received content data and reproducing the recorded content data, comprising the steps of:
performing a resolution conversion process on the recorded and reproduced content data;
outputting/inputting the converted content data to/from an external device;
managing the recorded and reproduced content data;
managing the content data so as to make reproduction of the content data impossible for transfer when the content data, from which copying is prohibi ted, is transferred to the external device; and
managing the content data so as to enable the reproduction of the content data in the recording/reproducing device if the content data to be transferred from the external device is content data which has been transferred from the recording/reproducing device to the external device and is now in an irreproducible state in the recording/reproducing device.

5. A recording/reproducing method according to Claim 4, further comprising the step of managing the content data so as to erase the transferred content data in the external device or make the transferred content data irreproducible, and enable the reproduction of the content data in the recording/reproducing device if the content data to be transferred from the external device is content data which has been transferred from the recording/reproducing device to the external device and is now in an irreproducible state in the recording/reproducing device.

6. A recording/reproducing method according to Claim 4, further comprising the steps of:
when converting and recording the converted content data on a removable recording medium, managing the content data recorded and reproduced, and managing the content data so as to transfer the content data to the removable recording medium and make the reproduction of the content data impossible when the content data, from which a copy is prohibited from being created, is transferred to the removable recording medium; and managing the content data so as to erase the content data in the removable recording medium or make the content data irreproducible, and enable the reproduction of the content data in the recording/reproducing device if the content data transferred from the removable recording medium to the recording/reproducing device is content data which has been transferred from the recording/reproducing device and is now in an irreproducible state in the recording/reproducing device.
